# EUROPEAN PATENT APPLICATION

(11) **EP 4 847 374 A1**
(43) Date of publication of application: **02.12.2026**
(21) Application number: 26173804.1
(22) Date of filing: 21.04.2026
(51) Int. Cl.: B64C 3/56, B64C 23/06, B64D 15/12

(54) **AIRCRAFT WING ASSEMBLY AND ELECTRICAL CONNECTOR**

(30) Priority: 27.05.2025 GB 202508219
(71) Applicant: Airbus Operations Limited, Bristol BS34 7PA (GB); Airbus Operations GmbH, 21129 Hamburg (DE)
(72) Inventor: MORRELL, Paul, Bristol, BS34 7PA (GB); WINKELMANN, Christoph, 21129 Hamburg (DE); HEMZACZEK, Rafal, Bristol, BS34 7PA (GB); DURSTON, John, Bristol, BS34 7PA (GB)
(74) Representative: Abel & Imray LLP

(57) **Abstract**

The invention relates to an aircraft wing assembly comprising a fixed wing (12) and a wing tip device (14). The wing tip device (14) is configurable between a flight configuration and a ground configuration. In the ground configuration the span of the aircraft wing assembly is reduced. The fixed wing comprises a fixed wing lug (16), the wing tip device comprises a wing tip lug (18), and the wing assembly further comprises a locking pin (20). In the flight configuration, the fixed wing lug (16) and wing tip device lug (18) are aligned such that the locking pin (20) may be inserted through the lugs into a locking position to lock the wing tip device (14) in the flight configuration. The locking pin (20) comprises a heating element (42). When the locking pin (20) is in the locking position the heating element (42) is electrically connected to a power system (30), and disconnected when not in the locking position.

## Description

### BACKGROUND OF THE INVENTION

The present invention concerns an aircraft wing assembly comprising a wing tip device configurable between a flight configuration and a ground configuration.

There is a trend towards increasingly higher aspect ratio wings for large passenger aircraft, for which it is desirable to have correspondingly large wing spans. However, the maximum aircraft span is effectively limited by airport operating rules which govern various clearances required when manoeuvring around the airport (such as the span and/or ground clearance required for gate entry and taxiway usage).

Movable wing tip devices have therefore been introduced into passenger aircraft whereby a wing tip device is movable between a flight configuration for use during flight and a ground configuration for use during ground-based operations. In the flight configuration, the wing tip device forms an extension of the wing and contributes to the lift generated by the wing. In the ground configuration, the wing tip device is moved away from the flight configuration such that the effective span of the aircraft wing is reduced, thereby allowing use of existing gates and taxiways. Such an arrangement is sometimes referred to as a 'folding wing tip'.

During any stage in the flight cycle, an aircraft wing and its movable components may encounter ice formation, as a result moving components may encounter reduced movement capabilities. In particular, the ice formation may obstruct or hinder the movement of a wing tip device between a flight and ground configuration, which could lead to delays getting aircraft on gate, and/or potentially damage components within an aircraft wing.

Aspects of the present invention seek to mitigate one or more of the above-mentioned challenges. Alternatively, or additionally, aspects of the present invention seek to provide an improved aircraft wing assembly, an improved aircraft wing, and an improved aircraft.

### SUMMARY OF THE INVENTION

The present invention provides, according to a first aspect, an aircraft wing assembly, the aircraft wing assembly comprising a fixed wing and a wing tip device at the tip thereof, wherein the wing tip device is configurable between: (i) a flight configuration for use during flight and (ii) a ground configuration for use during ground-based operations, in which ground configuration the wing tip device is rotated away from the flight configuration about a hinge axis such that the span of the aircraft wing assembly is reduced, and the fixed wing comprises a fixed wing lug, the wing tip device comprises a wing tip lug, and the wing assembly further comprises a locking pin, wherein in the flight configuration the fixed wing lug and wing tip device lug are aligned such that the locking pin may be inserted through the fixed wing lug and wing tip device lug into a locking position to lock the wing tip device in the flight configuration, wherein the locking pin comprises a heating element, wherein the locking pin is configured such that when the locking pin is in the locking position the heating element is electrically connected to a power system, and when the heating element is not in the locking position the heating element is not electrically connected to a power system.

Such an arrangement may simplify the electrical connection requirements of the locking pin and heating element. The risk of the locking pin being obstructed or hindered by ice formation is most significant when the locking pin is in the locking position. Therefore, the invention recognises the fact that use of the heating element is most likely only required when the locking pin is in the locking position. As such, it is only necessary to provide power to the locking pin when the locking pin is in the locking position. Alternative prior art arrangements may include a power system permanently attached to the heating element, for example with the use of wires which move with the locking pin. Such arrangements may be complex to design and/or manufacture, and may be vulnerable to damage during operation of the locking pin. The present invention may provide a more robust solution to providing power to the heating element.

The power system may comprise at least one fixed electrical connector. The locking pin may comprise at least one moveable electrical connector which move with the locking pin. The at least one fixed electrical connector and at least one moveable electrical connector may be positioned such that they contact one another when the locking pin is in the locking position, and do not contact one another when the locking pin is not in the locking position. The power system may comprise a pair of fixed electrical connectors, and the locking pin may comprise a corresponding pair of moveable electrical connectors. The corresponding pairs of electrical connectors may be configured to contact one another when the locking pin is in the locking position, and not contact one another when the locking pin is not in the locking position.

The power system may comprise at least one fixed electrical connector comprising a fixed induction coil, and the locking pin may comprise at least one moveable electrical connector comprising a moveable induction coil which moves with the locking pin, wherein the at least one fixed electrical connector and at least one moveable electrical connector are positioned such that the fixed induction coil is configured to induce a current in the moveable induction coil when the locking pin is in the locking position, and is not able to induce such a current when the locking pin is not in the locking position. The skilled person will appreciate that the power system may be electrically connected to the heating element without a physical connection being required.

The at least one fixed electrical connector may be located at or near a fixed wing lug or wing tip device lug. The locking pin may be associated with a locking pin housin The at least one moveable electrical connector may be located at the proximal end of the locking pin or the distal end of the locking pin.

The power system may comprise a power unit. The power unit may comprise a dedicated power unit, or may comprise a connection to a power unit which powers a number of components. The power system may comprise a connection unit for connection to a power unit of an aircraft.

The electrical connectors may be any suitable electrical connectors, chosen to allow reliable and secure connection and the capacity to handle the level of power delivery. For example, the electrical connectors may comprise one or more of conducting brushes, plates, rods, or plugs. The electrical connectors may be chosen such that a male connector is provided for connecting via a female connector.

The locking pin may be hollow.

The heating element may be used to heat the locking pin, for example to melt, and/or reduce the adhesive strength of any ice that has formed on the locking pin, fixed wing lugs, or wing tip device lugs during flight. The heating element may be activated and heat the locking pin whenever an aircraft including the wing assembly lands. Alternatively, the heating element may be activated only when icing up of the locking pin has been detected. Alternatively the pin may be heated at a low level throughout the flight. A temperature sensor may be provided in or proximate to the locking pin to detect the temperature of the locking pin. The temperature sensor may be utilised to determine whether the locking pin has iced up, or is likely to be in an iced up state. The temperature sensor may be located remote to the locking pin, for example on the fuselage of the aircraft. Alternatively or additionally, the heating element may be activated in response to weather reports and/or flight planning. Alternatively or additionally, an iced up state may be indicated by unexpectedly high resistance being experienced when trying to retract the locking pin from the locking position. The heating element may be arranged to be activated at a regular interval during flight of an aircraft comprising the aircraft wing assembly. The heating element may be arranged to be activated at set altitudes of an aircraft comprising a aircraft wing assembly. For example, such an arrangement may be activated when an aircraft is at a low altitude prior to landing, or when the aircraft as landed.

The locking pin further may comprise a load-bearing body. The load bearing body may be arranged to receive and bear the loads exerted on the locking pin via the fixed wing lug and wing tip device lug when the wing assembly is locked in the flight configuration

The locking pin may further comprise a heating cartridge, and the heating element may form part of the heating cartridge. The load-bearing body may surround the heating cartridge, or vice versa. The load bearing body may be cylindrical. The heating cartridge may be cylindrical. The cylindrical heating cartridge may be located within the inside of the cylindrical load bearing body, or vice versa. The skilled person will appreciate that alternative hollow bodies may be used, with one of the hollow load bearing body and hollow heating cartridge located within the other. For example, the hollow bodies may have a square or triangular cross-section. The heating element may extend along approximately the entire length of the locking pin, or any of up to 90%, 80%, 70%, 60% or 50% of the locking pin. Preferably, the heating element extends along the majority of the length of the locking pin that extends through the fixed wing lug and wing tip device lug. In such an arrangement, the heating element may efficiently heat the most exposed parts of the locking pin and potentially the fixed wing lugs and/or wing tip device lugs, which may be most vulnerable to icing up. The heating element may comprise a resistance coil and/or a positive temperature coefficient (PTC) heater.

The heating cartridge may comprise a resistance coil wound around a ceramic core. The heating cartridge may comprise a ceramic core, incorporating a PTC heater, for example the PTC heater having been printed or otherwise applied to the core. Use of a PTC heater may be advantageous due to the self-regulating nature of such devices. A thermal compound may thermally couple the heating cartridge to the load bearing body. The thermal compound may be any suitable thermal compound, as would be well understood by the person skilled in the art. The thermal compound may improve the heat transfer between the heating cartridge and the load bearing body, which may result in lower power being required in order to heat the locking pin sufficiently to avoid or remedy icing up of the locking pin, and/or speed up the de-icing of the locking pin.

The wing assembly may further comprise a threaded drive axle, and the locking pin may comprise a drive nut engaged with the threaded drive axle, such that rotational movement of the threaded drive axle drives translational movement of the locking pin. The locking pin may be moved into engagement with the fixed wing lug and wing tip device lug by rotation of the threaded drive axle in a first direction. The locking pin may be moved out of engagement with the fixed wing lug and wing tip device lug by rotation of the threaded drive axle in a second, opposite, direction. When the locking pin is hollow, the locking pin, when being retracted from the fixed wing lug and the wing tip device lug may overlap with the threaded drive axle. Such an arrangement may be particularly space efficient. The threaded drive axle may be rotated via various conventional means, as would be understood by a skilled person. In an alternative embodiment, the locking pin may be driven linearly via a pneumatic or hydraulic actuator. The heating cartridge may be located around a piston of a linear actuator.

According to a second aspect of the invention, there is provided an aircraft wing comprising the aircraft wing assembly of the first aspect of the invention.

According to a third aspect of the invention, there is provided an aircraft comprising the aircraft wing of the second aspect of the invention, or aircraft wing assembly of the first aspect of the invention.

According to a fourth aspect of the invention, there is provided a method of moving an aircraft wing assembly according to the first aspect of the invention from a flight configuration to a ground configuration, the method comprising the following steps: activating the heating element to heat the locking pin; retracting the locking pin from the fixed wing lug and wing tip device lug, actuating the wing tip device from the flight configuration to the ground configuration.

According to a fifth aspect of the invention, there is provided a method of moving an aircraft wing assembly according to the first aspect of the invention from a ground configuration to a flight configuration, the method comprising the following steps: aligning the fixed wing lug and wing tip device lug, actuating the locking pin to extend through the fixed wing lug and wing tip device lug into the locking position, thereby electrically connecting the heating element to a power system.

According to a sixth aspect of the invention, there is provided a method of deicing the locking pin of an aircraft wing assembly according to the first aspect of the invention, the method comprising the step of activating the heating element of the locking pin.

According to a seventh aspect of the invention, there is provided a locking pin for an aircraft wing assembly, the locking pin comprising a load bearing body, a heating cartridge located within the load bearing body, and an electrical connection moveable with the locking pin. The load bearing body and heating cartridge may be hollow. The load bearing body and heating cartridge may comprise any features described with reference to the first aspect, or any other aspect of the invention.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
FIGS 1A and 1B show a plan view and a frontal view respectively, of an aircraft according to a first embodiment of the invention;
FIGS 2 and 3 show an aircraft wing assembly according to a first embodiment of the invention;
FIG 4 shows an aircraft wing assembly according to a second embodiment of the invention;
FIG 5 shows the steps of operating an aircraft wing assembly according to the invention; and
FIG 6 shows the steps of deicing an aircraft wing assembly according to the invention.

### DETAILED DESCRIPTION

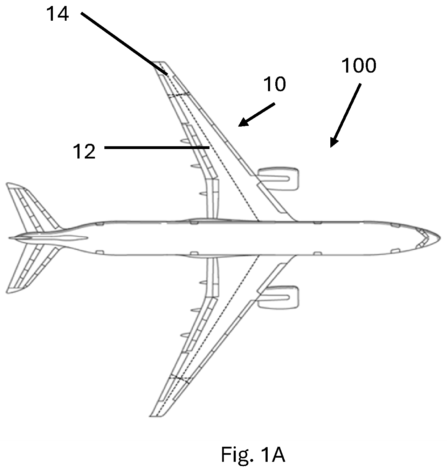

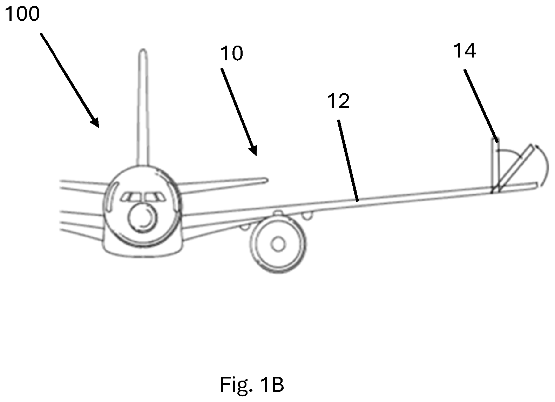

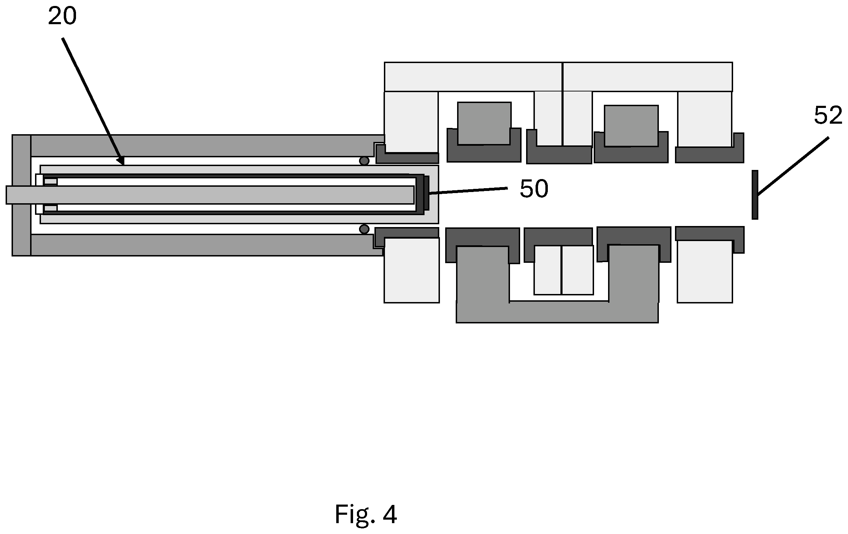

FIGS. 1A and 1B show a plan view and a front view of an aircraft 100 according to a first embodiment of the invention. The aircraft 100 comprises two wings 10 extending outwardly from a fuselage (only one wing is fully visible in FIG. 1B). Each wing 10 comprises a fixed wing 12 and a moveable wing tip device 14 located at the distal end of the fixed wing 12. In this embodiment, the wing tip device 14 is a planar wing tip extension. The wing tip device 14 is rotatably mounted to the fixed wing 12, and may be rotated from a flight configuration in which the span of the aircraft wing 10 is maximised, and a ground configuration in which the span of the aircraft wing 10 is reduced compared to the flight configuration. The wing tip device 14 may also be held in an intermediate position, somewhere between the flight configuration and the ground configuration. The skilled person will appreciate that various known mechanisms may be used to actuate the wing tip device 14 between the flight configuration and ground configuration. In this particular arrangement, a geared rotary actuator 32, as shown in figure 4, is used.

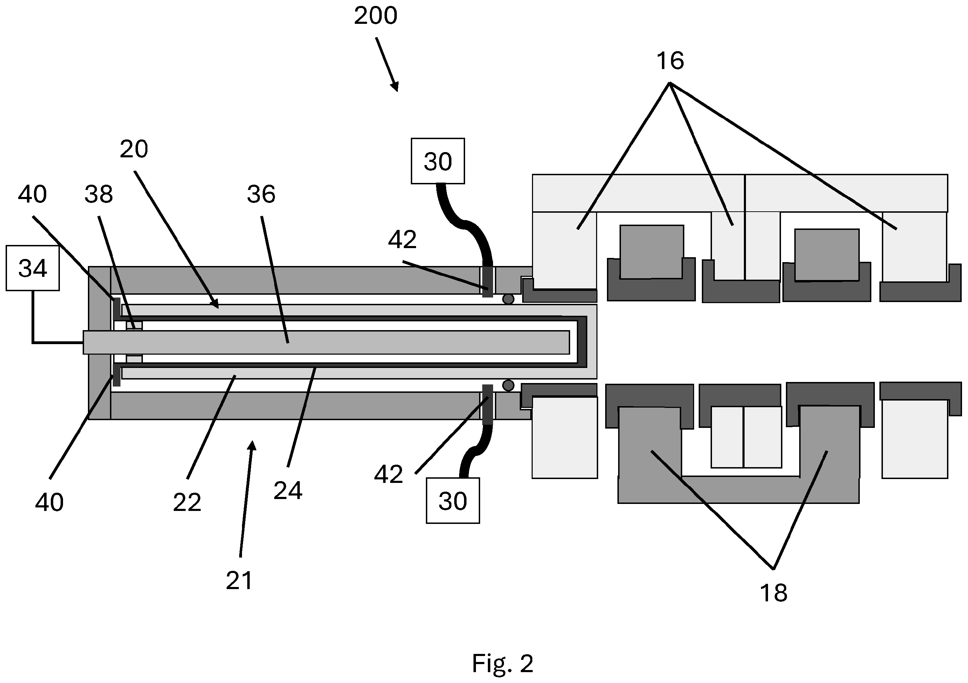

Figure 2 shows an aircraft wing assembly 200 which forms part of the wing 10 and enables the wing tip device 14 to be locked in the flight configuration. The fixed wing 12 comprises a plurality of fixed wing lugs 16 and the wing tip device 14 comprises a plurality of wing tip device lugs 18 (only one fixed wing lug 16 and wing tip device lug 18 are shown for clarity). When the wing tip device 14 is in the flight configuration, the fixed wing lugs 16 and wing tip device lugs 18 align. The aircraft wing assembly 200 comprises a locking pin 20 located within a housing unit 21. The locking pin 20 is moveable to be inserted through the plurality of fixed wing lugs 16 and plurality of wing tip device lugs 18 such that the wing tip device 14 is then locked in the flight configuration.

The locking pin 20 comprises a hollow outer load-bearing body 22 which surrounds a hollow heating cartridge 24. The heating cartridge 24 has a ceramic hollow body 26 around which a resistance wire has been embedded in a helical coil.

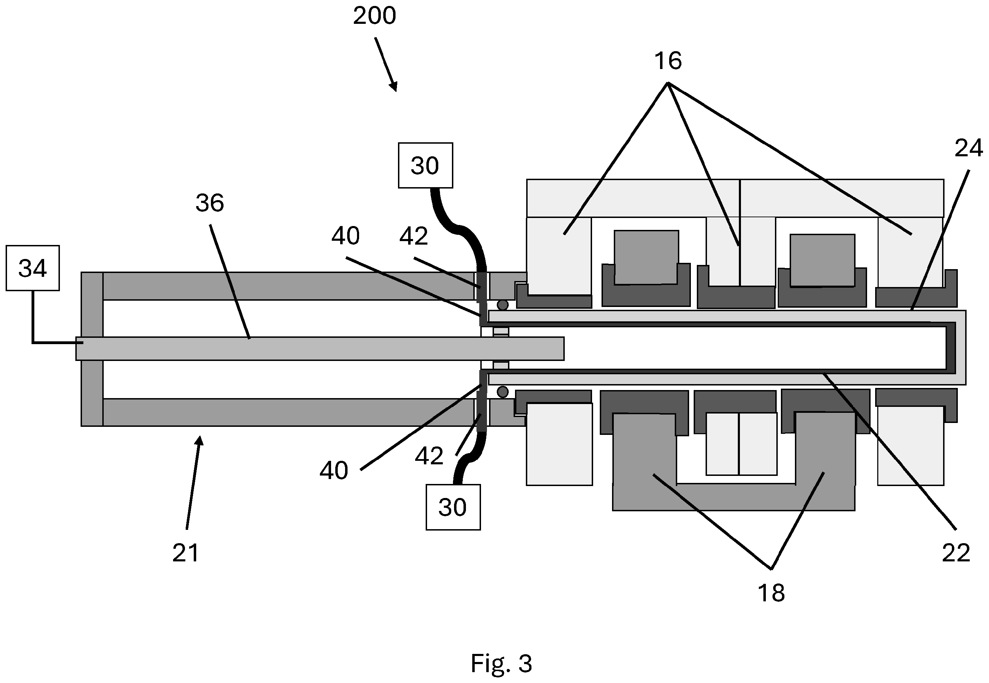

The locking pin 20 further comprises a drive nut 36 from which the load bearing body 22 and heating cartridge 24 extend. The drive nut 36 is mounted to a threaded drive screw 38, such that axial rotation of the drive screw 38 results in the drive nut 36, and hence locking pin 20, moving laterally with respect to the longitudinal axis of the drive screw 38. This allows the drive screw 38 to move the locking pin 20 into the locking position, as shown in figure 3, in which the locking pin 20 extends through the fixed wing lugs 16 and wing tip device lugs 18, thereby locking the wing tip device 14 in the flight configuration, and out of engagement with the lugs as shown in figure 2, thereby allowing the wing tip device 14 to be moved into the ground or intermediate positions. The drive screw 38 is driven by a drive mechanism 34, which may be any conventional drive mechanism as would be understood by the person skilled in the art.

The locking pin 20 further comprises a pair of electrical connectors 40, in the form of conductive brushes, located at the proximate end of the locking pin 20. A further pair of electrical connectors 42, in the form of conductive pins, extend through the housing unit 21. The electrical connectors 42 are linked to a power supply system 30, which may be local to the wing 10 or be part of the aircraft 100 central power system. The electrical connectors 40 are moveable with the locking pin 20, and the electrical connectors 42 are fixed in position. In figure 2, the electrical connectors 40 and electrical connectors 42 are not in contact with each other. Therefore, the resistance wire in the locking pin 20 is not connected to the power supply 30. As can be seen in figure 3, when the locking pin 20 has been extended through the fixed wing lugs 16 and wing tip device lugs 18, the wing tip device 14 is locked into the flight configuration. In this position, the electrical connectors 40 and 42 align and contact each other, thereby electrically connecting the locking pin 20 to the power supply 30. The power supply 30 may then be activated to heat the resistance wire, with the heating cartridge 24 then also increasing in temperature, which in turn heats the load-bearing body 22. The power supply 30 comprises a control unit which controls the activation of the heating cartridge 24 by supplying power to the resistance wire. A thermal compound may be applied to the contact surfaces between the load-bearing body 22 and the heating cartridge 24 in order to improve the thermal conductivity between the two components.

Figure 4 shows an alternative arrangement, but with many shared components. For brevity, only the parts which differ between the embodiments will be described. In particular, in the locking pin 20 of the alternative embodiment, an induction coil 50 is provided at the distal end of the locking pin. A corresponding induction coil 52 is provided as part of the wing assembly, positioned to be adjacent to the induction coil 50 when the locking pin 20 has been extended into the locking position. The induction coil 52 is connected to the power supply 30, which may power the induction coil 52 to induce a current in the induction coil 50, thereby electrically connecting the locking pin 20 to the power supply 30 when in the locking position. The locking pin 20 may then be heated as described above.

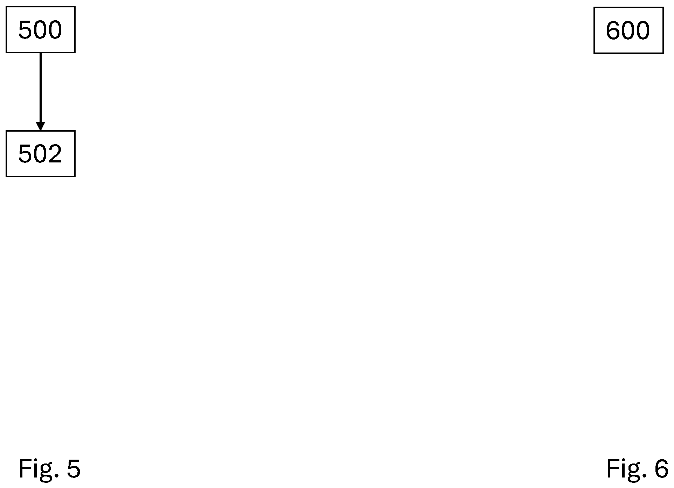

Figure 5 shows a method of operating an aircraft wing assembly according to the first or second embodiment of the invention. The method comprises the step 500 of aligning the fixed wing lugs and wing tip device lugs, then the step 502 of actuating the locking pin to extend through the fixed wing lug and wing tip device lug into the locking position, thereby electrically connecting the heating element to a power system.

Figure 6 shows a method of de-icing an aircraft wing assembly according to the first or second embodiment of the invention. The method comprises the step 600 of activating the heating element of the locking pin.
Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An aircraft wing assembly, the aircraft wing assembly comprising a fixed wing and a wing tip device at the tip thereof, wherein the wing tip device is configurable between: (i) a flight configuration for use during flight and (ii) a ground configuration for use during ground-based operations, in which ground configuration the wing tip device is rotated away from the flight configuration about a hinge axis such that the span of the aircraft wing assembly is reduced, and the fixed wing comprises a fixed wing lug, the wing tip device comprises a wing tip lug, and the wing assembly further comprises a locking pin, wherein in the flight configuration the fixed wing lug and wing tip device lug are aligned such that the locking pin may be inserted through the fixed wing lug and wing tip device lug into a locking position to lock the wing tip device in the flight configuration, wherein the locking pin comprises a heating element, wherein the locking pin is configured such that when the locking pin is in the locking position the heating element is electrically connected to a power system, and when the heating element is not in the locking position the heating element is not electrically connected to a power system.

2. An aircraft wing assembly according to claim 1, wherein the power system comprises at least one fixed electrical connector, and the locking pin comprises at least one moveable electrical connector which moves with the locking pin, wherein the at least one fixed electrical connector and at least one moveable electrical connector are positioned such that they contact one another when the locking pin is in the locking position, and do not contact one another when the locking pin is not in the locking position.

3. An aircraft wing assembly according to claim 1, wherein the power system comprises at least one fixed electrical connector comprising a fixed induction coil, and the locking pin comprises at least one moveable electrical connector comprising a moveable induction coil which moves with the locking pin, wherein the at least one fixed electrical connector and at least one moveable electrical connector are positioned such that the fixed induction coil is configured to induce a current in the moveable induction coil when the locking pin is in the locking position, and is not able to induce such a current when the locking pin is not in the locking position.

4. An aircraft wing assembly according to claim 1 or claim 2, wherein the power system comprises a pair of fixed electrical connectors, and the locking pin comprises a corresponding pair of moveable electrical connectors, and the corresponding pairs of electrical connectors are positioned such that they contact one another when the locking pin is in the locking position, and not contact one another when the locking pin is not in the locking position.

5. An aircraft wing assembly according to any of claims 2 to 4, wherein the at least one fixed electrical connector is located at or near a fixed wing lug or wing tip device lug.

6. An aircraft wing assembly according to any of claims 2 to 5, wherein the locking pin is associated with a locking pin housing.

7. An aircraft wing assembly according to any of claims 2 to 6, wherein the at least one moveable electrical connector is located at the proximal end of the locking pin.

8. An aircraft wing assembly according to any of claims 2 to 6, wherein the at least one moveable electrical connector is located at the distal end of the locking pin.

9. An aircraft wing assembly according to any preceding claim, further comprising a temperature sensor provided in or proximate to the locking pin to detect the temperature of the locking pin.

10. An aircraft wing assembly according to any preceding claim, the locking pin further comprising a load-bearing body.

11. An aircraft wing comprising the aircraft wing assembly of claim 1.

12. An aircraft comprising the aircraft wing of claim 11, or aircraft wing assembly of claim 1.

13. A method of moving an aircraft wing assembly according to claim 1 from a ground configuration to a flight configuration, the method comprising the following steps: aligning the fixed wing lug and wing tip device lug, actuating the locking pin to extend through the fixed wing lug and wing tip device lug into the locking position, thereby electrically connecting the heating element to a power system.

14. A method of de-icing the locking pin of an aircraft wing assembly according to claim 1, the method comprising the step of activating the heating element of the locking pin.

15. A locking pin for an aircraft wing assembly, the locking pin comprising a load bearing body, a heating cartridge located within the load bearing body, and an electrical connection moveable with the locking pin.
